# EUROPÄISCHE PATENTSCHRIFT

(11) **EP 4 453 391 B1**
(45) Veröffentlichungstag und Bekanntmachung des Hinweises auf die Patenterteilung: **15.04.2026**
(21) Anmeldenummer: 22843799.2
(22) Anmeldetag: 22.12.2022
(51) Int. Cl.: F01M 1/06, F16J 1/09, F16J 1/14, F16J 1/16, F16J 7/00, F02F 3/22

(54) **PLEUELSTANGE, KOLBEN, KURBELTRIEB SOWIE HUBKOLBEN- VERBRENNUNGSMOTOR**
CONNECTING ROD, PISTON, CRANK DRIVE, AND RECIPROCATING INTERNAL COMBUSTION ENGINE
BIELLE, PISTON, TRANSMISSION À MANIVELLE ET MOTEUR À COMBUSTION INTERNE À PISTONS ALTERNATIFS

(30) Priorität: 23.12.2021 DE 102021134519
(43) Veröffentlichungstag der Anmeldung: 30.10.2024
(73) Patentinhaber: Newgreen AG, 9422 Staad SG (CH); Newgreen American Inc., Pensacola, Florida 32503 (US)
(72) Erfinder: GESCHKE, Stephan, 9422 Staad SG (CH)
(74) Vertreter: Ullrich & Naumann PartG mbB
(86) Internationale Anmeldenummer: PCT/EP2022/087641
(87) Internationale Veröffentlichungsnummer: WO 2023/118525

(56) Entgegenhaltungen:
- EP-A1- 3 502 493
- DE-A1- 102017 201 741
- DE-A1- 3 005 720
- DE-T1- 10 081 225
- FR-A- 838 632
- FR-A1- 3 055 386
- JP-A- 2008 231 998
- US-A- 4 364 307

## Beschreibung

Die Erfindung betrifft eine Pleuelstange, insbesondere für eine Kraftmaschine, mit einem Kopfbereich, einem Mittelbereich und einem Fußbereich, wobei der Kopfbereich einen ersten Anschluss mit einer Aufdickung zum um die Schwenkachse drehbeweglichen Anschließen eines Kolbens an einer einen zur Aufdickung korrespondierenden Hinterschnitt aufweisenden Pleuelstangenaufnahme des Kolbens und der Fußbereich einen zweiten Anschluss zum Aufnehmen einer Kurbelwelle aufweist und der Kopfbereich über den Mittelbereich mit dem Fußbereich verbunden ist. Weiterhin betrifft die Erfindung einen Kolben, insbesondere für eine Kraftmaschine, mit einer Oberseite, einer Unterseite und einer Umfangsfläche, wobei die Umfangsfläche zum Führen des Kolbens in einer Zylinderbohrung und die Oberseite zum Aufnehmen von Druckkräften eines Gases in einem Zylinder ausgestaltet sind, die Unterseite eine Pleuelstangenaufnahme mit einer in einer Zug- und Druckrichtung im Wesentlichen parallel zu einer Schwenkachse angeordneten Hinterschneidung mit einem Querschnitt aufweist und die Pleuelstangenaufnahme zum formschlüssigen und um die Schwenkachse schwenkbaren Aufnehmen einer zur Pleuelstangenaufnahme korrespondierenden Aufdickung einer Pleuelstange eingerichtet ist. Weiterhin betrifft die Erfindung einen Kurbeltrieb, insbesondere für eine Kraftmaschine und/oder für einen Hubkolben-Verbrennungsmotor sowie einen Hubkolben-Verbrennungsmotor.

Bekannte Kraftmaschinen, die nach dem Hubkolbenprinzip arbeiten, beispielsweise Dieselmotoren oder auch Ottomotoren, weisen üblicherweise einen Kolben mit einer um eine Schwenkachse angeordneten Kolbenbohrung sowie ein dazugehöriges Pleuel beziehungsweise eine dazugehörige Pleuelstange mit einer korrespondierenden Bohrung auf, sodass der Kolben und die Pleuelstange mit einem sogenannten Kolbenbolzen miteinander schwenkbar verbunden werden. Damit ist bei einem Hubkolben-Verbrennungsmotor insbesondere im Bereich der bewegten Massen eine hohe Masse vorhanden, welches den Wirkungsgrad und damit auch den Schadstoffausstoß einer entsprechenden Kraftmaschine negativ beeinflusst beziehungsweise die Reduzierung des Schadstoffausstoßes verhindert.

Dabei sind Kolben und Pleuelstangen bekannt, bei denen der sogenannte Kopf der Pleuelstange eine Aufdickung aufweist, die in eine korrespondierende Hinterschneidung im Kolben eingehängt oder eingeschoben werden kann, sodass auf den Kolbenbolzen verzichtet werden kann. Insbesondere sind letztgenannte Konstruktionen aufgrund technischer Hindernisse nicht weiterverfolgt worden, da insbesondere bei der Montagesicherheit, der Schmierung einer entsprechenden Kontaktstelle sowie unter Fertigungsaspekten Probleme vorlagen.

Es ist bei solchen Kolben-Pleuelstangen-Verbindungen nicht möglich, beispielsweise mit einer Spritzölkühlung, insbesondere einer Kolbenboden-Kühlung mittels Spritzöl ausgehend von einem Bereich der Kurbelwelle, eine Kühlung und Schmierung dieser Fügestelle an der Schwenkachse sicherzustellen. Damit kann insbesondere auch der besondere Effekt der Wärmeabfuhr einer solchen Konstruktion zwischen Pleuelstange und Kolben nicht vollständig genutzt werden und/oder es kommt zu einer Überhitzung und/oder einem "Fressen" der entsprechenden Schwenkverbindung.

Die FR3055386 A1 offenbart eine Pleuelstange, gemäss dem Oberbegriff des Anspruchs 1.

Aufgabe der Erfindung ist es, den Stand der Technik zu verbessern.

Gelöst wird diese Aufgabe durch eine Pleuelstange, insbesondere für eine Kraftmaschine, mit einem Kopfbereich, einem Mittelbereich und einem Fußbereich, wobei der Kopfbereich einen ersten Anschluss mit einer Aufdickung zum um die Schwenkachse drehbeweglichen Anschließen eines Kolbens an einer einen zur Aufdickung korrespondierenden Hinterschnitt aufweisenden Pleuelstangenaufnahme des Kolbens und der Fußbereich einen zweiten Anschluss zum Aufnehmen einer Kurbelwelle aufweist und der Kopfbereich über den Mittelbereich mit dem Fußbereich verbunden ist, wobei die Pleuelstange eine den zweiten Anschluss mit dem ersten Anschluss flüssigkeitsführend verbindende Schmiermittelführung aufweist, sodass ein am zweiten Anschluss im Bereich der Kurbelwelle in die Schmiermittelführung eingebrachtes Schmiermittel durch die Schmiermittelführung zum ersten Anschluss geführt ist und das Schmiermittel zum Schmieren und/oder Kühlen des ersten Anschlusses vorliegt.

Eine solche Anordnung stellt mit wenigen Veränderungen bekannter Pleuelstangen, nämlich dem Vorsehen einer Schmiermittelführung entlang der Pleuelstange, sicher, dass der erste Anschluss zwischen Pleuelstange und Kolben sicher geschmiert und/oder gekühlt ist.

In diesem Zusammenhang seien die folgenden Begriffe erläutert:
Eine "Pleuelstange" dient in einem sogenannten "Kurbeltrieb" dazu, zwischen einer Kurbelwelle und dem sich hin- und herbewegenden Kolben innerhalb des Zylinders mechanisch eine Verbindung herzustellen. Dabei ist die Pleuelstange mit einem "Kopfbereich" am Kolben angeschlossen, wobei ein "Fußbereich" über einen "Mittelbereich" mit dem Kopfbereich verbunden ist und den Anschluss an einen exzentrischen Kurbelzapfen der Kurbelwelle sicherstellt. Dabei weist der Kopfbereich den Anschluss mit der Aufdickung auf und der Fußbereich einen zweiten Anschluss zum Aufnehmen der Kurbelwelle.

Ein "Anschluss" beschreibt dabei die mechanische und insbesondere um die Schwenkachse schwenkbare Verbindung zwischen dem Kolben und der Pleuelstange, wobei dieser Anschluss bei der vorliegenden Ausführung eines Kolbens und einer entsprechenden Pleuelstange formschlüssig und um die Schwenkachse drehbeweglich ausgeführt ist.

Eine "Aufdickung" der Pleuelstange ist ein solcher Bereich, welcher einen größeren oder breiteren Querschnitt oder einen größeren oder breiteren Durchmesser aufweist als ein davor liegender Teil der Pleuelstange. Insbesondere kann eine solche Aufdickung dazu dienen, gemeinsam mit der Hinterschneidung, insbesondere mit den durch die Hinterschneidung gebildeten Flächen eine formschlüssige zug- oder druckfeste Verbindung auszubilden.

Eine "Schwenkachse" ist beispielsweise die Achse, um welche die Pleuelstange am Kolben drehbar oder schwenkbar aufgenommen ist. Diese Schwenkachse entspricht dabei beispielsweise der Achse des Kolbenbolzens im Stand der Technik.

Ein "Kolben" ist ein bewegliches Bauteil, welches zusammen mit einem umgebenden Gehäuse, im Falle einer Kraftmaschine eines "Zylinders", einen abgeschlossenen Hohlraum bildet, wobei ein Volumen des Hohlraums sich durch eine Bewegung des Kolbens im Zylinder verändert. Ein solches Prinzip kann in unterschiedlichen Bauformen verwirklicht werden, im Fall der vorliegenden Erfindung ist insbesondere ein auf und ab bewegbarer Hubkolben innerhalb eines prismatisch ausgebildeten Zylinders bezeichnet.

Eine "Hinterschneidung" bezeichnet eine solche Ausgestaltung einer Aufnahme oder eines Teils einer Aufnahme, bei welcher ein Bauteil oder ein Bereich oder Teilbereich in Kraftrichtung formschlüssig ein Herausziehen verhindert oder formschlüssig eine Übertragung von Kräften ermöglicht. Eine solche Hinterschneidung kann dabei die durch einen Vorsprung gebildete Fläche sein, welche dann von einem hinter dieser Hinterschneidung eingehängten oder angesetzten Bauteil zur Übertragung von Kräften genutzt wird.

Dabei dient eine "Pleuelstangenaufnahme" an der Unterseite des Kolbens dazu, eine Pleuelstange zugfest und schwenkbeweglich aufzunehmen, sodass der Kolben gemeinsam mit der Pleuelstange in einem sogenannten Kurbeltrieb, also beispielsweise bei einer auf einer Kurbelwelle aufgesetzten Pleuelstange, eine kraftschlüssige Verbindung des Kolbens mit der Kurbelwelle derart hergestellt ist, dass der Kolben kraftschlüssig an der Pleuelstangenaufnahme mit der Pleuelstange verbunden ist.

Eine "Kurbelwelle" ist eine Aneinanderreihung mehrerer Kurbeln auf einer gemeinsamen Welle mit einer zentralen Drehachse, wobei an jeder Kurbel eine jeweilige Pleuelstange angeschlossen ist, die dann auf einen Kolben wirkt. Mittels eines Gasdrucks auf dem Kolben kann dann die Kurbelwelle über die Pleuelstangen angetrieben werden. Insbesondere weist eine solche Kurbelwelle in einem Verbrennungsmotor eine zentrale Ölführung mit Austrittsstellen zum Schmieren der Kurbelwellenlager auf.

Eine "Schmiermittelführung" beschreibt eine beispielsweise kanalartig oder röhrenartig ausgeführte Ausgestaltung eines Teilbereichs der Pleuelstange, sodass Schmiermittel sicher geführt, also von einem Startbereich in einen Endbereich zuverlässig verbracht werden kann. Insbesondere ist so eine Schmiermittelführung dabei beispielsweise ein in die Pleuelstange eingebrachter Kanal.

Ein "Schmiermittel", welches auch als Schmierstoff bezeichnet wird, wird zur sogenannten Schmierung eingesetzt und dient dabei insbesondere zum Verringern von Reibung, Verschleiß und/oder direktem Materialkontakt. Weiterhin kann ein Schmiermittel auch zur Schwingungsdämpfung und/oder zum Abdichten oder auch als Korrosionsschutz eingesetzt sein. Zudem kann ein Schmierstoff gleichzeitig Kühlmittel sein.

Ein solcher Schmierstoff ist dabei beispielsweise ein Schmierfett, ein Schmieröl oder im Zusammenhang mit einem Hubkolben-Verbrennungsmotor im einfachsten Fall das in einer Ölwanne oder einem Öltank zur Schmierung des Motors verwendete Motoröl.

Das "Schmieren" beschreibt dabei insbesondere die rheologischen Eigenschaften des Schmiermittels, also ein Verringern von Reibung, Verschleiß und/oder direktem Materialkontakt, wohingegen ein "Kühlen" die Abfuhr von Wärme insbesondere aus dem Bereich des ersten Anschlusses durch einen Wärmeübergang in das Schmiermittel und ein entsprechendes Verbringen des Schmiermittels aus dem zu kühlenden Bereich beschreibt.

Um die Pleuelstange besonders einfach auszugestalten, verläuft die Schmiermittelführung in Form eines Schmiermittelkanals, wobei der Schmiermittelkanal insbesondere entlang des Mittelbereiches verläuft. Ein solcher Schmiermittelkanal kann dabei beispielsweise eine entlang des Mittelbereichs der Pleuelstange verlaufende Bohrung sein, wobei hierdurch im Idealfall nur Material in einer neutralen Faser des gegen Biegung ausgelegten Mittelbereiches verläuft und daher keine oder nur eine nicht nennenswerte Schwächung der Pleuelstange insgesamt durch den Schmiermittelkanal erfolgt.

In einer Ausführungsform verläuft die Schmiermittelführung von einem dem zweiten Anschluss zugeordneten Kurbelwellenauge zu der Aufdickung, insbesondere von einer Innenfläche des Kurbelwellenauges zur Aufdickung.

Mit dieser Ausgestaltung der Erfindung kann beispielsweise ein ohnehin innerhalb einer hohlen Kurbelwelle vorhandene und insbesondere unter Druck stehende Ölmenge zum Schmieren von Lagerstellen der Kurbelwelle in einem Motorgehäuse dazu genutzt werden, in das jeweilige Kurbelwellenauge eingebracht zu werden. Dazu kann in dem Kurbelwellenauge oder in einer im Kurbelwellenauge eingelegten Lagerschale eine entsprechende Bohrung oder ein Loch vorhanden sein, sodass an einem zum Kurbelwellenauge korrespondierenden Kurbelwellenzapfen mit Überdruck austretendes Motoröl in die Schmiermittelführung eingeführt und zur Aufdickung verbracht werden kann, sodass letztlich mittels der unter Druck stehenden Menge Motoröl die Aufdickung und damit der erste Anschluss zwischen Pleuelstange und Kolben zuverlässig geschmiert und gekühlt wird.

Um die Pleuelstange besonders zuverlässig und einfach herstellen zu können, ist die Schmiermittelführung mittels Funkenerosion und/oder mittels Tiefbohren in die Pleuelstange eingebracht.

Ein solches "Funkerodieren", welches kurz auch als "Erodieren" beschrieben wird, kann zur hochpräzisen Materialbearbeitung genutzt werden. Dazu wird das zu bearbeitende, elektrisch leitende Werkstück in einem Dielektrikum aufgenommen und bearbeitet; ein ebenfalls elektrisch leitendes Werkzeug wird dabei in die Nähe des Werkstoffs gebracht und eine zwischen dem Werkzeug und dem Werkstück anliegende Spannungsdifferenz dazu genutzt, mittels lokaler Entladung zwischen Werkzeug und Werkstück Funken zu erzeugen und vorrangig vom Werkstück Material abzutragen.

Insbesondere wird dabei beim sogenannten Senk- oder Bohrerodieren mittels eines stabförmigen Werkzeuges eine kanalartige, erodierte, Bohrung erzeugt.

Demgegenüber kann ein "Tiefbohren" als Spezialbearbeitung eines Bohrens genutzt werden, wobei sich ein Tiefbohren dadurch auszeichnet, dass eine Bohrungstiefe um ein Vielfaches größer ist als der Durchmesser.

In einer Ausführungsform weist die Schmiermittelführung an der Aufdickung ein Schmiermittelreservoir auf, wobei das Schmiermittelreservoir insbesondere in eine Außenfläche der Aufdickung eingebracht und/oder der Pleuelstangenaufnahme zugeordnet ist.

Damit kann ein entsprechender Rückhalt an Schmiermittel, also eine zusätzlich zur Verfügung stehende Schmiermittelmenge im Bereich der Aufdickung vorgehalten werden und beispielsweise auch als hydraulisches Kissen zum Verhindern eines direkten Werkstückkontaktes zwischen einer Innenfläche der Hinterschneidung und der Außenfläche der Aufdickung genutzt werden.

Ein "Schmiermittelreservoir" kann dabei beispielsweise als Vertiefung in einer Oberfläche der Aufdickung vorgesehen sein.

Ebenso kann diesem Schmiermittelreservoir oder einem anderen Bereich der Aufdickung eine Ventileinrichtung zugeordnet sein. Diese Ventileinrichtung dient dabei zum Steuern eines am zweiten Anschluss im Bereich der Kurbelwelle in die Schmiermittelführung eingebrachten und durch die Schmiermittelführung zum ersten Anschluss geführten Schmiermittelflusses mittels eines Schwenkens der Aufdickung um die Schwenkachse.

Folglich kann mittels der Ventileinrichtung die Schmiermittelmenge jeweils abhängig von einer Winkelstellung des Schwenkens der Aufdickung um die Schwenkachse aktiv beeinflusst werden, sodass beispielsweise Schmieröl nur dann abfließen kann, wenn die Verbindung zwischen Kolben und Pleuelstange unbelastet oder nur wenig belastet ist.

Weitere Ausgestaltungen dieser Ventileinrichtung an der Pleuelstange können analog zu der im Folgenden beschriebenen Ventileinrichtung eines Kolbens eines weiteren Aspektes der Erfindung ausgeführt werden.

In einem weiteren Aspekt wird die Aufgabe gelöst durch einen Kolben, insbesondere für eine Kraftmaschine, mit einer Oberseite, einer Unterseite und einer Umfangsfläche, wobei die Umfangsfläche zum Führen des Kolbens in einer Zylinderbohrung und die Oberseite zum Aufnehmen von Drucckräften eines Gases in einem Zylinder ausgestaltet sind, die Unterseite eine Pleuelstangenaufnahme mit einer in einer Zug- und Druckrichtung im Wesentlichen parallel zu einer Schwenkachse angeordneten Hinterschneidung mit einem Querschnitt aufweist und die Pleuelstangenaufnahme zum formschlüssigen und um die Schwenkachse schwenkbaren Aufnehmen eine zur Pleuelstangenaufnahme korrespondierende Aufdickung einer Pleuelstange gemäß einer der vorig beschriebenen Ausführungsformen aufweist, wobei die Pleuelstangenaufnahme eine Ventileinrichtung zum Steuern eines am zweiten Anschluss im Bereich der Kurbelwelle in die Schmiermittelführung eingebrachten und durch die Schmiermittelführung zum ersten Anschluss geführten Schmiermittelflusses mittels eines Schwenkens der Aufdickung um die Schwenkachse aufweist.

Eine solche Ventileinrichtung dient, ebenso wie bei der möglichen Anordnung der Ventileinrichtung an der Pleuelstange, dazu, den Schmiermittelfluss aktiv und abhängig von einer Winkelstellung des Schwenkens der Aufdickung um die Schwenkachse zu steuern und damit den Schmiermittelfluss beispielsweise nur zu solchen Momenten zu ermöglichen, wenn eine entsprechende Last zwischen Kolben und Pleuel während einer Umdrehung der Kurbelwelle besonders gering oder reduziert ist. Somit kann beispielsweise der Schmiermittelfluss durch die Ventileinrichtung verhindert sein, wenn die Verbindung zwischen Kolben und Pleuel durch einen Verbrennungsprozess im Zylinder stark belastet ist, sodass entsprechendes Schmieröl beispielsweise auch in einem Schmiermittelreservoir verbleibt und dann, bei einer Entlastung des Kolbens, in einer anderen Winkelstellung der Kurbelwelle das erwärmte Schmieröl abfließt.

Dabei ist, wie schon erwähnt, unerheblich, ob die Ventileinrichtung und/oder auch das Schmiermittelreservoir an der Aufdickung der Pleuelstange oder innerhalb der Pleuelstangenaufnahme des Kolbens ausgeführt ist.

In einer Ausführungsform weist die Ventileinrichtung eine in eine Innenfläche der Hinterschneidung eingebrachte Steuertasche oder mehrere in eine Innenfläche der Hinterschneidung eingebrachte Steuertaschen auf, sodass insbesondere im Bereich eines oberen Druckpunkts und/oder im Bereich eines unteren Druckpunkts des Kolbens in der Zylinderbohrung und/oder einer im Wesentlichen geradlinigen Anordnung der Pleuelstange in Bezug zu einer Bewegungsachse des Kolbens in der Zylinderbohrung der Schmiermittelfluss begrenzt oder verhindert ist.

Eine solche Steuertasche kann mit einfachen mechanischen Mitteln, beispielsweise mit einem Fräsprozess, einem Erodierprozess oder während eines Gießens der Pleuelstange und/oder des Kolbens eingebracht werden und ist daher günstig herzustellen. Dabei ist, wie schon vorig erwähnt, unerheblich, ob eine solche Steuertasche innerhalb des Pleuels, also innerhalb der Aufdickung, oder eben innerhalb des Kolbens angeordnet ist. Ebenso ist denkbar, dass ein Teil der Steuertasche in der Pleuelstange sowie ein anderer Teil der Steuertasche innerhalb des Kolbens angeordnet ist.

Die Geometrie der Steuertasche ist dabei so gewählt, dass beispielsweise rein mechanisch festgelegt ist, dass ein Schmiermittelfluss im Bereich eines jeweiligen Totpunktes des Kolbens in der Zylinderbohrung und/oder im Bereich einer im Wesentlichen geradlinigen Anordnung der Pleuelstange im Bezug zu einer Bewegungsachse des Kolbens verhindert ist und bei einem Schwenken des Pleuels um die Schwenkachse der Schmiermittelfluss dann freigegeben wird.

Damit kann eine aktive und gesteuerte Schmierung und Kühlung des ersten Anschlusses zwischen Kolben und Pleuelstange erfolgen, wodurch insbesondere die Wärmeabfuhr aus dem Verbrennungsraum optimiert ist und daher der Kolben mit wenig thermischen Reserven ausgelegt und damit sehr leicht sein kann. Dies steigert den Wirkungsgrad eines entsprechenden Hubkolben-Verbrennungsmotors signifikant.

In diesem Zusammenhang kann die Ventileinrichtung, insbesondere die Steuertasche, derart angeordnet und/oder ausgebildet sein, dass für einen Winkel von ±20°, ±15°, ±10° und/oder ±5° zwischen einer Längsachse der Pleuelstange und der Bewegungsachse des Kolbens in der Zylinderbohrung der Schmiermittelfluss begrenzt ist.

Diese Ausgestaltung legt entsprechende Winkel derart fest, dass insbesondere eine volle Umdrehung der Kurbelwelle dazu genutzt wird, entsprechende Steuerbereiche der Ventileinrichtung und/oder der Steuertasche erfindungsgemäß auszunutzen. Winkelangaben beziehen sich hierbei auf einen Vollwinkel von 360°.

Im Hinblick auf eine besonders effektive Kühlung und Schmierung des Kolbens kann die Pleuelstangenaufnahme mindestens einen sich von der Hinterschneidung oder einer Innenfläche der Hinterschneidung bis zur Umfangsfläche und/oder bis zu einer oder mehreren in der Umfangsfläche angeordneten oder ausgebildeten Ringnuten erstreckenden Schmiermittelkanal aufweisen. Der Schmiermittelkanal kann über die in der Pleuelstange ausgebildete Schmiermittelführung in geeigneter Weise mit Schmiermittel versorgt werden, um den Kolben im Betrieb eines Verbrennungsmotors in besonders effektiver Weise zu kühlen.

Dabei können beispielsweise zwei Schmiermittelkanäle vorgesehen sein, die je nach Winkelstellung einer mit dem Kolben gekoppelten Pleuelstange in abwechselnder Weise über die Schmiermittelführung der Pleuelstange mit Schmiermittel versorgt werden. Zu einem Zeitpunkt, zu dem einer dieser Schmiermittelkanäle über die Schmiermittelführung mit Schmiermittel versorgt wird, ist der andere Schmiermittelkanal von der Zuführung abgetrennt, und umgekehrt. Hierdurch ist eine abwechselnde Versorgung der beiden Schmiermittelkanäle realisiert. In einem Zwischenzustand, in dem sich die Pleuelstange im Wesentlichen in einer mittigen, vertikal zu einer Oberseite oder Unterseite des Kolbens ausgerichteten Winkelstellung befindet, können beide Schmiermittelkanäle von der Zuführung abgetrennt sein, sodass sich in der Schmiermittelführung der Pleuelstange - ausgehend von einem kurbelwellenseitigen Ende der Pleuelstange - ein Druck aufbauen kann, um Schmiermittel in einer nachfolgenden, einen Schmiermittelkanal mit Schmiermittel versorgenden Winkelstellung besonders effektiv und druckvoll in den Schmiermittelkanal einzuführen oder einzuspritzen und durch den Schmiermittelkanal gegebenenfalls bis zur Umfangsfläche und/oder den Ringnuten des Kolbens zu führen. In entsprechender Weise ergeben sich je nach Winkelstellung der Pleuelstange sich verändernde Druckverhältnisse in den beiden Schmiermittelkanälen.

Das Schmiermittel kann hierbei durch den Kolben bis zu seiner Umfangsfläche und/oder seinen Ringnuten geführt werden und dort aus der Umfangsfläche oder im Bereich der Ringnuten aus dem Kolben austreten, um eine besonders effektive Schmierung des Kolbens in einer Kolbenführung zu gewährleisten. Ausgetretenes Schmiermittel kann anschließend wieder in Richtung einer Kurbelwelle und/oder einer Ölwanne gelangen, wobei es sich abkühlen kann. Von dort kann es über die Pleuelstange und deren Schmiermittelführung wieder in einen oder mehrere Schmiermittelkanäle des Kolbens gelangen. Im Ergebnis ist hierdurch ein Schmiermittelkreislauf von einem dem Kolben abgewandten unteren Ende der Pleuelstange durch die Schmiermittelführung und den Kolben bis wieder zum unteren Ende der Pleuelstange realisiert. Bei Realisierung zweier derartiger Schmiermittelkanäle im Kolben ergeben sich zwei solche Kreisläufe, im Rahmen derer - je nach Anordnung der Schmiermittelkanäle im Kolben - Schmiermittel in entgegengesetzten Richtungen aus dem Kolben an dessen Umfangsfläche und/oder Ringnuten herausgeführt werden kann.

Im Hinblick auf eine besonders effektive Kühlung und Schmierung des Kolbens kann ein Schmiermittelkanal mehrere Auslässe in der Umfangsfläche und/oder im Bereich der Ringnuten aufweisen. Dabei kann Schmiermittel durch einen Einlass und mehrere Auslässe im Kolben geführt werden.

Weiterhin im Hinblick auf eine besonders effektive Schmierung und Kühlung des Kolbens kann ein Auslass oder Ende des mindestens einen Schmiermittelkanals in eine in der Umfangsfläche oder im Bereich der Ringnuten ausgebildete Ausnehmung münden. Dabei kann eine derartige Ausnehmung flächig ausgebildet sein, wobei sie einen größeren Durchmesser oder eine größere flächige Erstreckung aufweisen kann als eine Querschnittsfläche des Auslasses oder des Endes des Schmiermittelkanals. Beispielsweise kann die Ausnehmung eine im Wesentlichen rechteckige Form aufweisen. In der Ausnehmung kann sich Schmiermittel ansammeln und hierdurch ein Sicherheitsreservoir für die Versorgung der Umfangsfläche des Kolbens mit Schmiermittel bilden. Je nach Erfordernis können mehrere derartige Ausnehmungen in der Umfangsfläche gebildet sein, wobei in einer hinsichtlich einer Schmierung besonders effektiven Weise in jede Ausnehmung mindestens ein Auslass oder ein Ende eines Schmiermittelkanals münden sollte.

Weiterhin im Hinblick auf eine besonders effektive Kühlung und Schmierung des Kolbens kann in mindestens einem Schmiermittelkanal mindestens ein Abschnitt mit einem gegenüber einem Durchmesser des mindestens einen Schmiermittelkanals vergrößerten Durchmesser oder mindestens ein Pufferraum für Schmiermittel ausgebildet sein. Ein derartiger Abschnitt oder Pufferraum kann als Sicherheitsreservoir eine geeignete Menge an Schmiermittel aufnehmen, um eine sichere Versorgung von Schmiermittel durch den Schmiermittelkanal und damit eine sichere Kühlung und Schmierung an gewünschten Positionen innerhalb und außerhalb des Kolbens zu gewährleisten.

Im Konkreten kann der mindestens eine Pufferraum im Wesentlichen kugelförmig ausgebildet sein oder kann der mindestens eine Pufferraum im Bereich einer oder mehrerer in der Umfangsfläche angeordneten oder ausgebildeten Ringnuten länglich und/oder gekrümmt ausgebildet sein. Hinsichtlich der Ausgestaltung des Pufferraums kann der jeweilige konkrete Ort der Ausbildung des Pufferraums mit den jeweiligen am Ort vorliegenden räumlichen und gestalterischen Randbedingungen berücksichtigt werden.

Ebenfalls im Hinblick auf eine besonders effektive Kühlung und Schmierung des Kolbens kann der mindestens eine Schmiermittelkanal eine Abzweigung mit einem Abzweigungskanal zur Führung von Schmiermittel in Richtung eines an die Oberseite des Kolbens angrenzenden Bereichs aufweisen. Eine derartige Abzweigung ermöglicht eine weitergehende Verteilung des Schmiermittels im Kolben. So kann Schmiermittel in Richtung Oberseite des Kolbens geführt werden, wo aufgrund einer Verbrennung in einem an die Oberseite des Kolbens angrenzenden Brennraum üblicherweise besonders hohe Temperaturen herrschen. Dabei kann der Abzweigungskanal und damit eine Führung des Schmiermittels innerhalb des Kolbens an der Oberseite des Kolbens vorbei verlaufen, ohne an der Oberseite auszutreten.

Vielmehr kann sich der Abzweigungskanal nach einem Passieren des Bereichs bis zur Hinterschneidung, bis zu einer Innenfläche der Hinterschneidung, bis zur Unterseite des Kolbens oder mit einem Auslass bis zu einem Bereich der Hinterschneidung oder Pleuelstangenaufnahme, der neben demjenigen Bereich der Hinterschneidung ausgebildet ist, in dem sich eine Aufdickung einer Pleuelstange im mit dem Kolben gekoppelten Betriebszustand befindet, erstrecken. Durch eine derartige Ausgestaltung des Abzweigungskanals wird das durch den Abzweigungskanal geführt Schmiermittel nach Durchlaufen des Abzweigungskanals in einen Bereich unterhalb des Kolbens oder an einer Unterseite des Kolbens freigegeben. Von dort aus kann das Schmiermittel wieder in Richtung einer Kurbelwelle und unteres Ende der Pleuelstange gelangen. Anschließend kann das Schmiermittel zur Bildung eines Kreislaufs wieder durch die Schmiermittelführung der Pleuelstange in den Schmiermittelkanal und auch in den Abzweigungskanal geführt werden.

In dem an die Oberseite des Kolbens angrenzenden Bereich kann ein mit dem Abzweigungskanal strömungsverbundener Pufferraum für Schmiermittel ausgebildet sein, um eine besonders effektive Kühlung des Kolbens in diesem Bereich zu gewährleisten. Dieser Pufferraum kann quasi als Erweiterung oder Ausbuchtung des Abzweigungskanals ausgebildet sein.

Alternativ oder zusätzlich hierzu kann die Abzweigung in einem - vorzugsweise im Wesentlichen kugelförmigen - Pufferraum gebildet sein. In der Praxis hat sich gezeigt, dass hierdurch eine besonders sichere Führung des Schmiermittels ohne beispielsweise eine Blasenbildung im Schmiermittel gewährleistet werden kann.

In einem weiteren Aspekt wird die Aufgabe gelöst durch einen Kurbeltrieb, insbesondere für eine Kraftmaschine und/oder für einen Hubkolben-Verbrennungsmotor, mit einem Kolben, einer Pleuelstange und einer Kurbelwelle, wobei der Kolben gemäß einer der vorig beschriebenen Ausführungsformen und/oder eine Pleuelstange gemäß einer der vorig beschriebenen Ausführungsformen ausgeführt ist.

Ein solcher Kurbeltrieb kann, beispielsweise als vormontierte Baugruppe, dazu genutzt werden, einen sehr effizienten Hubkolben-Verbrennungsmotor vorzubereiten.

In einem weiteren Aspekt wird die Aufgabe gelöst durch einen Hubkolben-Verbrennungsmotor, insbesondere einen Dieselmotor oder einen Ottomotor, mit einem Kolben gemäß einer der vorig bezeichneten Ausführungsformen, einer Pleuelstange gemäß einer der vorig bezeichneten Ausführungsformen und/oder einem Kurbeltrieb gemäß der vorig beschriebenen Ausführung.

Ein "Dieselmotor" beschreibt in diesem Zusammenhang einen Verbrennungsmotor, welcher mittels einer Kompressionszündung arbeitet, wobei ein "Ottomotor" eine Fremdzündung, beispielsweise mittels eines elektrischen Funkens, aufweist. Hierbei sind Mischformen möglich.

Im Weiteren wird die Erfindung anhand von Ausführungsbeispielen näher erläutert. Es zeigen
- Figur 1: in einer schematischen Darstellung ein erstes Ausführungsbeispiel einer Kurbeleinheit mit einem Kolben sowie einer Pleuelstange in einer isometrischen Ansicht,
- Figur 2a: den Kolben der Kurbeleinheit der Figur 1 in einer schematischen Seitenansicht,
- Figur 2b: den Kolben in einer schematischen Ansicht von unten,
- Figur 2c: den Kolben der Figur 2b in einer Schnittdarstellung A-A,
- Figur 2d: den Kolben in einer Unteransicht mit unterschiedlichen Schnittebenen,

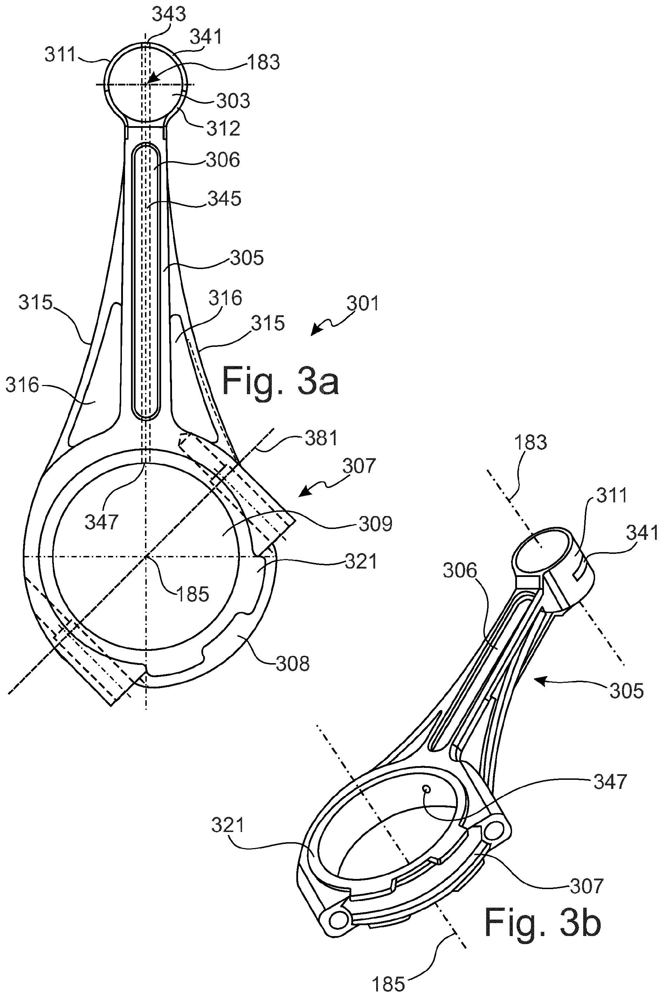

- Figur 3a: die Pleuelstange der Figur 1 in einer schematischen Seitenansicht,
- Figur 3b: die Pleuelstange in einer isometrischen Darstellung,
- Figur 4: in einer perspektivischen Seitenansicht mit einem herausgeschnittenen 90°-Segment ein weiteres Ausführungsbeispiel eines erfindungsgemäßen Kolbens,
- Figur 5: den Kolben aus Figur 4 in einer weiteren perspektivischen Seitenansicht,
- Figur 6: den Kolben aus Figur 4 in einer weiteren perspektivischen Seitenansicht,
- Figur 7: in einer Seitenansicht, teilweise geschnitten, ein Ausführungsbeispiel eines Kurbeltriebs mit einem erfindungsgemäßen Kolben und
- Figur 8: in einer perspektivischen Darstellung, teilweise geschnitten, ein Ausführungsbeispiel eines Hubkolben-Verbrennungsmotors mit einem erfindungsgemäßen Kolben.

Eine Kurbeleinheit 101 weist einen Kolben 201 sowie eine Pleuelstange 301 auf. Die Kurbeleinheit 101 ist Teil eines Dieselmotors (nicht dargestellt), wobei der entsprechende Dieselmotor beispielsweise vier, sechs oder auch acht dieser Kurbeleinheiten aufweisen kann, wobei die jeweiligen Kolben 201 entlang einer Bewegungsachse 281 innerhalb entsprechender Zylinder beweglich aufgenommen sind. Die Pleuelstange 301 ist dabei um eine Kurbelachse 185 auf jeweiligen Kurbelzapfen einer entsprechend der Zylinderanzahl ausgelegten Kurbelwelle aufgenommen. Dabei ist der Dieselmotor beispielsweise als Reihen-Vierzylinder, Reihen-Sechszylinder oder V-Acht-Motor ausgebildet. Es handelt sich dabei jeweils um einen Dieselmotor mit Hochdruck-Einspritzung für Dieselkraftstoff und einer Turbo- und/oder Kompressor-Aufladung, wodurch hohe Verbrennungstemperaturen im jeweiligen Zylinder entstehen. Andere Bauformen sind selbstverständlich ebenso mittels der Kurbeleinheit 101 in entsprechender Anzahl darstellbar. Der Kolben 101 ist aus einer Aluminiumlegierung gebildet.

Die jeweilige Pleuelstange 301 ist aus Stahl geschmiedet und spanend nachbearbeitet sowie um eine Schwenkachse 183 gegenüber dem Kolben 201 schwenkbar angeordnet, sodass bei einer vollständigen Rotation der Kurbelwelle (nicht dargestellt) die Kurbelachse 185 auf einer Kreisbewegung geführt ist, der Kolben 201 mittels der Pleuelstange 301 im Zylinder auf und ab bewegt wird und damit eine vollständige Umdrehung der Kurbelwelle ohne mechanische Hindernisse vollführt wird. An einer Oberseite 203 des Kolbens 201 durch die Verbrennung von beispielsweise eingespritztem Diesel erzeugter Gasdruck treibt dabei den Kolben 201 an, sodass insgesamt der Motor nach dem Dieselprinzip betrieben wird. Das Zünden des eingespritzten Dieselkraftstoffs erfolgt dabei durch die Kompression von angesaugter Luft im Zylinder, die Verdichtungstemperatur liegt dabei bei über 700 °C, die daraus sich ergebende Verbrennungstemperatur bei über 1.200 °C. Entsprechend hoch sind die thermischen Einflüsse auf den Kolben 201.

Der Kolben 201 weist neben der in Richtung des Brennraums im Zylinder gerichteten Oberfläche 203 eine Umfangsfläche 205 sowie eine Unterseite 207 auf. Innerhalb der Oberseite ist konzentrisch zur Bewegungsachse 281 ein Brennraum 241 mit einer kegelartigen Kalotte 243 angeordnet, der den Brennraum des Zylinders im Kolben 201 erweitert.

Ein überwiegender Bestandteil der Umfangsfläche 205 formt ein Kolbenhemd, welches in Richtung der Unterseite 207 zylindrisch verläuft und dünnwandig ausgebildet ist. Von der Oberseite 203 ausgehend weist der Kolben 201 einen schmalen Umfangskragen 221 auf, welcher einen Abstand von der Oberseite 203 zu einer ersten Ringnut 223 bildet. Innerhalb dieser ersten Ringnut 223 ist ein Kolbenring zum Abdichten gegenüber dem Zylinder angeordnet. Weiter in Richtung der Unterseite 207 sind eine Ringnut 225 sowie eine Ringnut 227 angeordnet, wobei in der Ringnut 225 ein weiterer Kolbenring als Dichtring eingelegt ist, in der Ringnut 227 ein Kolbenring in der Funktion als Ölabstreifring (Kolbenringe jeweils nicht dargestellt). An der Ringnut 227 sind zusätzlich Bohrungen 229 angeordnet, welche ein Abfließen von Motoröl begünstigen.

Der Umfangskragen 221 ist bei Dieselmotoren nach dem Stand der Technik als sogenannter "Feuersteg" bekannt und bei diesen Motoren im Stand der Technik mit einem deutlich geringeren Durchmesser ausgeführt, als die Umfangsfläche eines Kolbens. Der Umfangskragen 221 hingegen weist einen Radius 282 auf, wobei dieser Radius 282 innerhalb technischer Toleranzen identisch zu einem Radius 284 der Umfangsfläche 205 ist. Der Kolben 201 kann damit bezüglich seiner zylindrischen Form in einer einzigen Aufspannung und mit einer einzigen Einstellung auf einer Drehbank gefertigt werden.

Der Umfangskragen 221 kann in dieser Form ausgeführt sein, da die übliche Funktion eines "Feuersteges" des Standes der Technik, nämlich eine zusätzliche Wärmeabfuhr über diesen Feuersteg durch einen dünneren Durchmesser und damit Zugang für die Verbrennungsgase beim Kolben 201 entfallen kann. Nähere Erläuterungen hierzu werden untenstehend aufgeführt.

An der Unterseite 207 weist der Kolben 201 eine Aufnahme 210 für die Pleuelstange 301 auf. Die Aufnahme 210 ist dabei im Wesentlichen durch eine Hinterschneidung 211 gebildet, welche eine konzentrisch um die Schwenkachse 183 angeordnete Innenfläche 213 aufweist und durch eine jeweilige Kante 217 begrenzt ist. Um die Hinterschneidung 211 entlang der Schwenkachse 183 zugänglich zu halten und ein Fertigen der Hinterschneidung 211 mit der Innenfläche 213 zu ermöglichen, weist das Kolbenhemd 219 zu beiden Seiten entlang der Schwenkachse 183 einen Ausschnitt 220 auf. Durch diesen Ausschnitt 220 kann sowohl die Pleuelstange 301 in den Kolben 201 eingeschoben werden, als auch während der vorigen Fertigung des Kolbens 201 ein entsprechendes Werkzeug zur Feinbearbeitung der Innenfläche 213 hindernisfrei eingeführt werden.

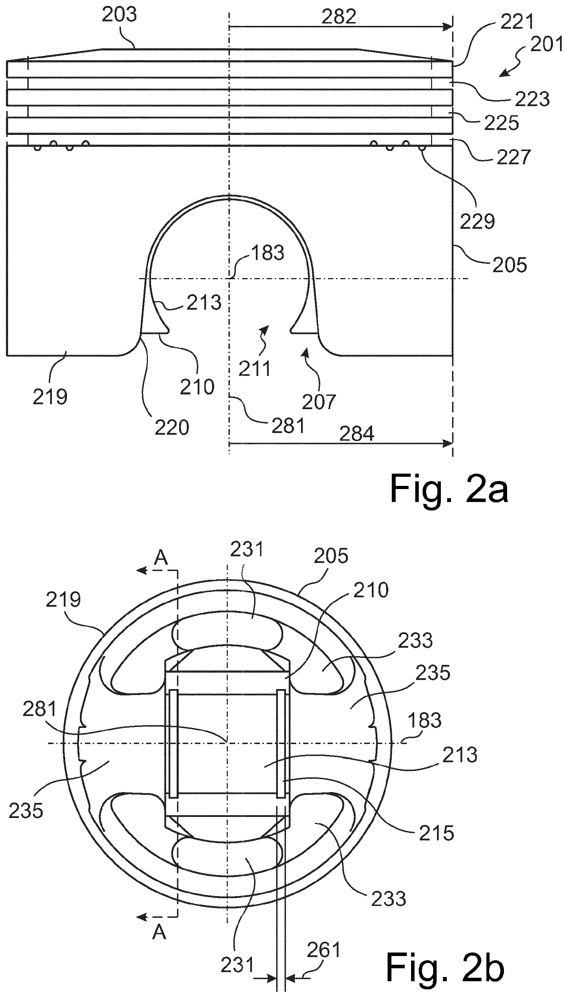

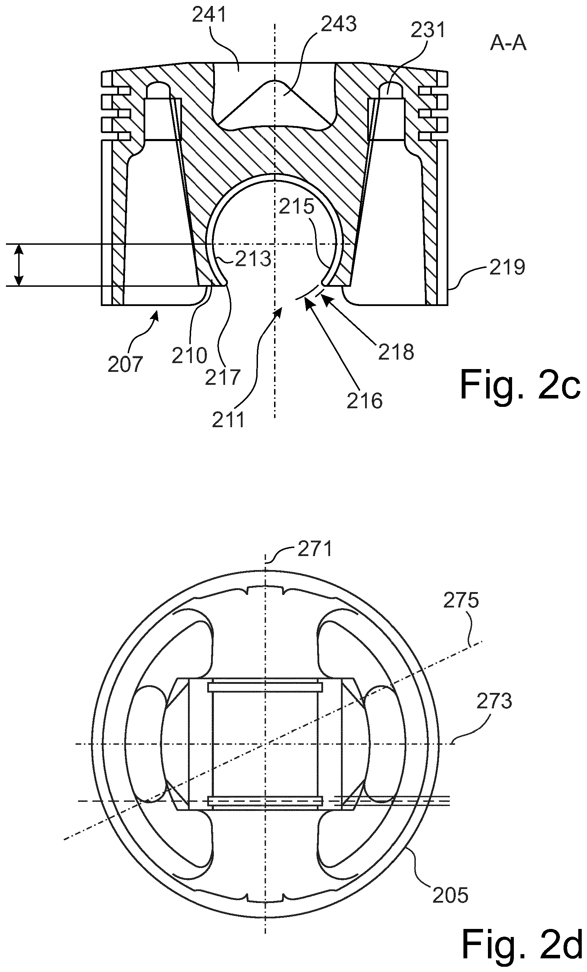

Von einer Unterseite des Kolbens 201 erkennbar (vergleiche auch Figur 2b) weist der Kolben 201 unterschiedliche Volumina auf. Neben den direkt technisch bedingten Volumina des Kolbens 201, nämlich dem Volumen zum Bilden der Aufnahme 210 mit der Hinterschneidung 211, dem Volumen für das Kolbenhemd 219 sowie entsprechenden Volumina zum Schaffen von weichen geometrischen Übergängen, weist der Kolben 201 eine jeweilige symmetrisch zur Bewegungsachse 281 angeordnete Aufdickungen 231, ebenfalls symmetrisch zur Bewegungsachse 281 angeordnete Taschen 233 sowie zusätzliche, symmetrisch zur Bewegungsachse 281 und in Richtung der Schwenkachse 183 angeordnete Aufdickungen 235 auf. Die entsprechenden Volumina der Aufdickungen 231, der Tasche 233 sowie der Aufdickungen 235 sind dabei so gewählt, dass beliebige Schnittflächen durch die Bewegungsachse 281, nämlich beispielsweise solche entlang einer Schnittebene 271, einer Schnitteben 273 oder einer Schnittebene 275 gebildete Schnittflächen (vergleiche auch Figur 2d), jeweils flächengleich mit einer Toleranz von beispielsweise 2 % in Bezug zu beispielsweise der kleinesten der jeweiligen Vergleichsschnittflächen sind. Mit dieser geometrischen Ausgestaltung ist sichergestellt, dass das thermische Ausdehnungsverhalten des Kolbens 201 in unterschiedlichen polaren Positionen um die Bewegungsachse 281 nahezu identisch oder sogar identisch ist. Dazu ist bei der Aufdickung 231 Material aufgetragen, bei der Tasche 233 Material abgezogen sowie bei der Aufdickung 235 Material aufgetragen. Somit werden beispielsweise technisch bedingte Volumina, wie für die Aufnahme 210, in den jeweiligen Schnittebenen entsprechend ausgeglichen. Ebenso dient beispielsweise eine jeweilige Aufdickung 235 dazu, zumindest teilweise das am Ausschnitt 220 fehlende Material im Kolbenhemd 219 zu entsprechenden Querschnittsflächen wiederum auszugleichen. Entsprechend andere Bauteile werden analog dazu durch Abzug oder Hinzufügen entsprechender Volumina des Materials des Kolbens 201 ausgeglichen.

Innerhalb der Innenfläche 213 der Hinterschneidung 211 sind entlang der Schwenkachse 183 zu beiden Seiten symmetrisch zur Bewegungsachse 281 Ringnuten 215 eingebracht, wobei diese Ringnuten aufgrund der Ausformung der Hinterschneidung 211 als Teil-Ringnuten 215 ausgebildet sind. Die jeweilige Ringnut 215 weist einen von einem Durchmesser 216 der Innenfläche 213 ausgehenden Querschnitt bis hin zu einem Durchmesser 218 auf.

Die Pleuelstange 301 weist einen Pleuelkopf 303, einen Mittelbereich 305 sowie einen Kurbelwellenanschluss 307 auf. Der Pleuelkopf ist als Aufdickung mit einer zylindrischen Außenfläche 311 ausgebildet. Die Außenfläche 311 entspricht dabei unter Berücksichtigung notwendiger Toleranzen dem Durchmesser 216 der Innenfläche 213 des Kolbens 201. Weiterhin sind an Endbereichen der Aufdickung in Richtung der Schwenkachse 183 Fasen 312 angeordnet. Somit kann der Pleuelkopf 303 entlang der Schwenkachse 183 in den Kolben 201 eingeschoben werden, sodass ein Schwenkgelenk mit Bewegungsfreiheit um die Schwenkachse 183 gebildet ist.

Der Mittelbereich 305 verbindet den Pleuelkopf 303 mit dem Kurbelwellenanschluss 307 und weist entlang seiner Ausdehnung zwischen dem Pleuelkopf 303 und dem Kurbelwellenanschluss 307 eine beidseitige Vertiefung 306 auf, sodass insgesamt ein biegesteifer Querschnitt des Mittelbereichs 305 gemäß eines Doppel-T-Trägers gebildet ist. Zusätzlich sind Stege 315 mit gegenüber dem Mittelbereich 305 gebildeten Ausnehmungen 316 derart angeordnet, dass der Mittelbereich 305 gegenüber dem Kurbelwellenanschluss 307 zusätzlich biegesteif und dennoch möglichst leicht verbunden ist.

Der Kurbelwellenanschluss 307 ist etwa zur Hälfte aus einem Teil der Pleuelstange 301 sowie einem sogenannten Deckel 308 gebildet, wobei zusammen das Kurbelwellenauge 309 gebildet ist, welches konzentrisch um die Kurbelachse 185 angeordnet ist. Um einen reibungsarmen, verschleißfesten und notlauffähigen Anschluss zur Kurbelwelle herzustellen, ist das Kurbelwellenauge 309 mit einer Lagerschale 321 versehen. Die Lagerschale ist verdrehsicher im Kurbelwellenauge 309 angeordnet, sodass die Position der Lagerschale 321 in Bezug zur Pleuelstange 301 rotationsfest ist.

Weiterhin weist die Pleuelstange 301 an der Außenfläche 311 des Pleuelstangenkopfes 303 eine Ventilnut 341 auf, welche mit einer Austrittsöffnung 343 verbunden ist. Die Austrittsöffnung 343 ist Teil eines Ölkanals 345, welcher zwischen der Austrittsöffnung 343 und einer innerhalb des Kurbelwellenauges 309 angeordneten Eintrittsöffnung 347 verläuft. Der Ölkanal 345 ist dabei in der neutralen Faser des Mittelbereichs 305 angeordnet, sodass durch den Ölkanal 345 eine möglichst geringe Schwächung des Mittelbereichs 305, insbesondere gegen Biegung, erfolgt.

Zum Montieren der Pleuelstange 301 mit dem Kolben 201 wird der Pleuelkopf 303 entlang der Schwenkachse 183 in die Hinterschneidung 211 eingeschoben. Innerhalb der Ringnut 215 ist jeweils ein elastischer Sicherungsring mit rundem Drahtquerschnitt eingelegt, und zwar so, dass ein Teil des Sicherungsrings (nicht dargestellt) in den Querschnitt der durch die Innenfläche 213 gebildeten Hinterschneidung 211 hineinreicht. Dieser Sicherungsring wird sodann mittels der Fase 312 am Pleuelkopf 303 in die Ringnut zurückgedrängt, wobei der Querschnitt des Sicherungsrings so gewählt ist, dass dieser vollständig zwischen dem Durchmesser 216 und dem Durchmesser 218 positioniert werden kann.

Die Fase 312 erleichtert damit das Einschieben des Pleuelkopfes 303 in den Kolben 201. Ist der Pleuelkopf 303 vollständig symmetrisch eingeschoben, so federt ein entsprechender Sicherungsring zurück in seine Ausgangsposition und sichert die Pleuelstange 301 am Pleuelkopf 303 gegen unbeabsichtigtes Herausnehmen entlang der Schwenkachse 183.

Die Funktion der Kurbeleinheit 101 bezüglich der Schmierung der Verbindung zwischen Pleuelkopf und Kolben 201 im Hinterschneidung 211 sei wie folgt erläutert:

Innerhalb der nicht dargestellten Kurbelwelle ist zum Schmieren entsprechender Lagerstellen der Kurbelwelle ein innerhalb der Kurbelwelle verlaufender Ölkanal mit entsprechenden Austrittsbohrungen an den Lagerstellen vorgesehen. Ebenso weist die Kurbelwelle an den Kurbelzapfen, welche die jeweilige Pleuelstange 301 um die Kurbelachse 185 aufnehmen, entsprechende Austrittsbohrungen für unter Druck stehendes Motoröl vorgesehen. Das Motoröl wird dann in einer umlaufenden Ringnut auf der Kurbelwelle vorgehalten und drängt durch die Eintrittsöffnung 347 in den Ölkanal 345 in zur Austrittsöffnung 343. Mit der Austrittsöffnung 343 sowie der Ventilnut 341 ist ein Ölreservoir geschaffen, in dem unter Druck stehendes Motoröl für die Schmierung der Hinterschneidung 311 zur Verfügung steht.

Weiterhin dient die Ventilnut 341 dem Steuern des Ölflusses abhängig von einer Stellung der Kurbelwelle und einer daraus folgenden Stellung der Pleuelstange 301 und des Kolbens 201. Ist der Kolben 201 an einem oberen Totpunkt oder an einem unteren Totpunkt angelangt, so steht die Pleuelstange 301 im Wesentlichen senkrecht innerhalb der Zylinderbohrung entlang der Bewegungsachse 281. In diesem Zustand ist die Ventilnut 341 vollständig von der Innenfläche 213 der Hinterschneidung 211 umgeben, sodass kein Öl durch die Ventilnut 341 austreten kann. In diesem Moment, beispielsweise wenn eine Zündung des Kraftstoffs im Zylinder erfolgt, ist damit eine sichere Schmierung und ein idealer Wärmeübergang zwischen Kolben 201 und Pleuelstange 301 sichergestellt. Ebenso verhindert das vorgehaltene Ölpolster im Ölreservoir zusätzlich einen direkten Materialkontakt.

Wird nun der Kolben 201 durch die Verbrennungsgase beschleunigt, so schwenkt die Kurbelwelle zunächst um circa 90°, die Pleuelstange 301 wird ausgelenkt. Die Ventilnut 341 ist so bemessen, dass nun ein Teil der Ventilnut 341 an einer Kante 217 der Hinterschneidung 211 freigegeben wird. In diesem Moment kann durch den Ölkanal 345 geführtes unter Druck stehendes Motoröl austreten und damit auch Wärme aus dem Bereich der Hinterschneidung 311 abtransportieren. In diesem Zustand ist die Verbindung zwischen Pleuelkopf 303 und Hinterschneidung 211 relativ gering belastet, sodass ein Austritt des Motoröls hier vorteilhaft genutzt werden kann, auch wenn dadurch weniger Öl zur Schmierung bereitsteht.

Erreicht die Kurbelwelle dann eine untere Totstellung (180°), so verschließt die Hinterschneidung 311 die Ventilnut 341, in diesem Moment können daher Massekräfte des Kolbens 201 wieder mit vollem Öldruck aufgenommen werden. Ebenso kommt es an dieser Stelle zu einer weiteren Wärmeübertragung in das Motoröl, bei einer Kurbelwellenstellung von 270° wird mittels des Öldrucks dann wieder Wärme aus der geöffneten und von der Kante 217 freigegebenen Ventilnut 341 abgeführt. Bis zu einer Kurbelwellenstellen von 360° (Vollwinkel, entspricht 0°) wiederholt sich dann ein Schließen der Ventilnut 341 mittels der Kante 217, sodass im oberen Totpunkt wieder voller Öldruck in der Verbindungsstelle und die Möglichkeit zur erneuten Wärmeabfuhr erreicht ist. Dieser Zyklus wiederholt sich selbstverständlich mit jeder Kurbelwellenumdrehung, sodass im Ergebnis eine ausreichende Schmierung der Bewegung um die Schwenkachse 183 sowie zusätzlich eine optimierte Wärmeabfuhr aus dem Kolben 201 ergibt.

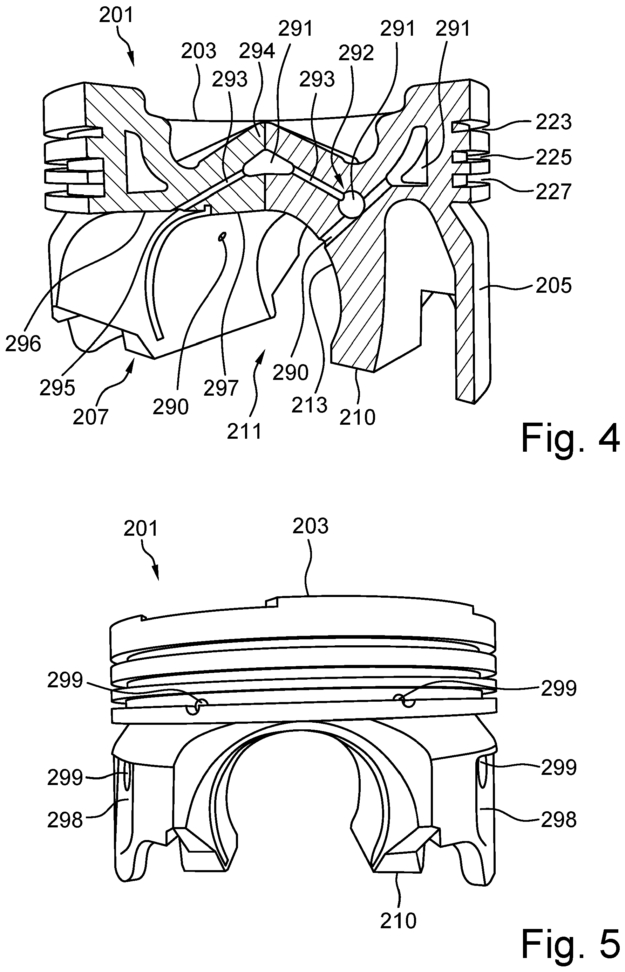

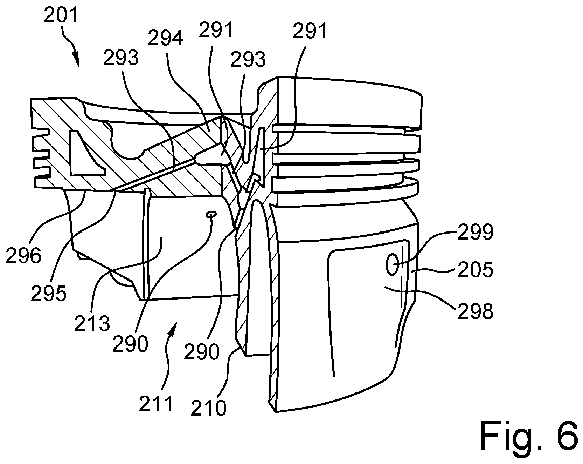

Die Figuren 4 bis 6 zeigen in perspektivischen Seitenansichten und aus verschiedenen Blickwinkeln ein weiteres Ausführungsbeispiel eines erfindungsgemäßen Kolbens 201, wobei der gezeigte Kolben 201 zur besseren Veranschaulichung seines "Innenlebens" ein herausgeschnittenes 90°-Segment aufweist. Dabei sind die hierfür erforderlichen Einschnitte in den Kolben 201 zum einen in Richtung der Schwenkachse 183 und zum anderen senkrecht zu dieser Richtung vorgenommen.

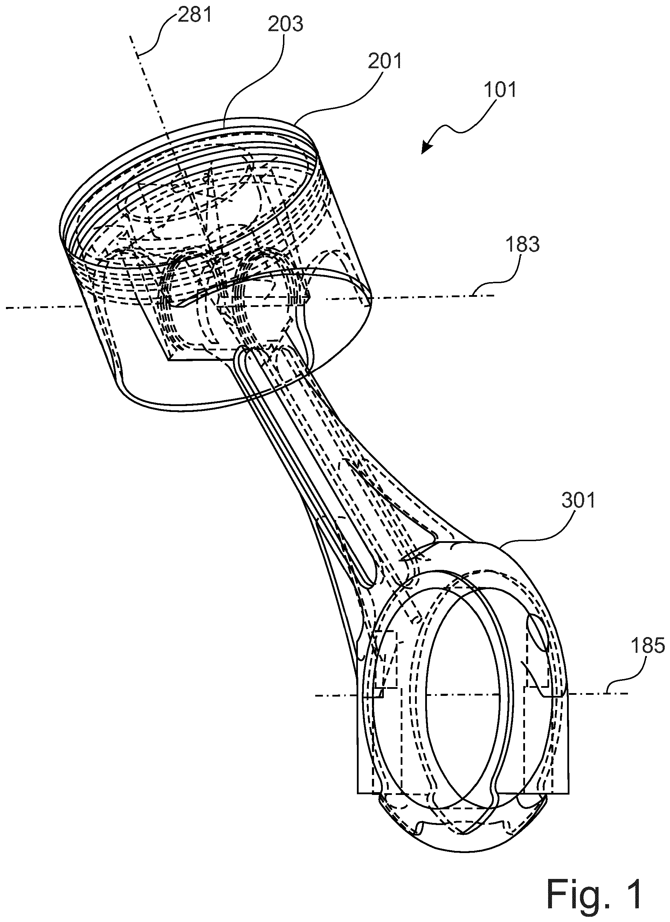

Der in den Figuren 4 bis 6 gezeigte Kolben 201 weist im Wesentlichen denselben äußeren Aufbau wie der in den Figuren 1 bis 2d gezeigte Kolben 201 auf, sodass sich bezüglich des oben beschriebenen Kolbens 201 erläuterte Vorteile auch bei dem im Folgenden beschriebenen Kolben 201 ergeben. Allerdings unterscheidet sich der in den Figuren 4 bis 6 gezeigte Kolben 201 hinsichtlich seines "Innenlebens" von dem in den Figuren 1 bis 2d gezeigten Kolben 201.

Im Konkreten weist die Pleuelstangenaufnahme 210 zwei sich von der Innenfläche 213 der Hinterschneidung 211 bis zur Umfangsfläche 205 und bis zu in der Umfangsfläche 205 angeordneten Ringnuten 223, 225, 227 erstreckende Schmiermittelkanäle 290 auf. In Figur 4 ist besonders gut erkennbar, dass sich die Schmiermittelkanäle 290 zu entgegengesetzten Bereichen der Umfangsfläche 205 erstrecken. Dabei ist der eine Schmiermittelkanal 290 quasi aufgeschnitten erkennbar und der andere Schmiermittelkanal 290 lediglich durch seinen Einlass in der Innenfläche 213.

Die Schmiermittelkanäle 290 verlaufen zunächst bis zu einem im Wesentlichen kugelförmigen Pufferraum 291. Dort ist eine Abzweigung 292 gebildet, die in einen Abzweigungskanal 293 führt. Durch den Abzweigungskanal 293 wird Schmiermittel in einen weiteren Pufferraum 291 in einen an die Oberseite 203 des Kolbens 201 angrenzenden Bereich 294 geführt. Durch diesen weiteren Pufferraum 291 ist ein Schmiermittelreservoir zur Unterstützung der Kühlung dieses Bereichs 294 bereitgestellt.

Der Abzweigungskanal 293 setzt sich nach Durchlaufen des weiteren Pufferraums 291 wieder in Richtung Hinterschneidung 211 oder in Richtung Unterseite 207 des Kolbens 201 fort. Der Abzweigungskanal 293 endet mit einem Auslass 295 in einem Bereich 296 der Hinterschneidung 211, der neben demjenigen Bereich 297 der Hinterschneidung 211 ausgebildet ist, in dem sich eine Aufdickung 303 einer Pleuelstange 301 im mit dem Kolben 201 gekoppelten Betriebszustand befindet. Das Schmiermittel kann aus dem Abzweigungskanal 293 also neben der mit dem Kolben 201 gekoppelten Pleuelstange 301 gegebenenfalls in einen Motorraum austreten.

Schmiermittel, das aus dem im Wesentlichen kugelförmigen Pufferraum 291 nicht in den Abzweigungskanal 293 geführt wird, wird weiter in einen äußeren Pufferraum 291 geführt, der im Bereich der Ringnuten 223, 225, 227 innerhalb des Kolbens 201 ausgebildet ist. Dieser äußere Pufferraum 291 weist eine gekrümmte Form auf, die an die äußere Umfangsfläche 205 des Kolbens 201 im Wesentlichen angepasst ist. Der Pufferraum 291 verläuft im Wesentlichen entlang einem halben Umfang des Kolbens 201 und ist somit quasi halbringförmig ausgebildet. Aufgrund der Tatsache, dass bei dem vorliegenden Ausführungsbeispiel zwei Schmiermittelkanäle 290 realisiert sind, sind bei dem vorliegenden Ausführungsbeispiel ebenfalls zwei solche äußeren gekrümmten Pufferräume 291 realisiert, wobei jeder Schmiermittelkanal 290 in einen solchen Pufferraum 291 führt.

Aus dem äußeren Pufferraum 291 wird das Schmiermittel zur Umfangsfläche 205 und zu den Ringnuten 223, 225, 227 geführt, wobei in der Umfangsfläche 205 Auslässe 299 des Schmiermittelkanal 290 oder der Schmiermittelkanäle 290 gebildet sind. Die Auslässe 299 sind teilweise in Ausnehmungen 298 der Umfangsfläche 205 realisiert. Derartige Ausnehmungen 298 dienen als Schmiermittelreservoire für Schmiermittel. Bei dem hier gezeigten Ausführungsbeispiel sind insgesamt vier Ausnehmungen 298 in der Umfangsfläche 205 realisiert, wobei in jeder Ausnehmung 298 ein Auslass 299 realisiert ist, sodass eine sichere Befüllung der Ausnehmungen 298 mit Schmiermittel gewährleistet ist.

Bei dem hier gezeigten Ausführungsbeispiel ist jeweils ein Abzweigungskanal 293 aus den beiden Schmiermittelkanälen 290 realisiert. Beide Abzweigungskanäle 293 laufen in dem weiteren Pufferraum 291 im Bereich 294 zusammen oder kreuzen sich in diesem weiteren Pufferraum 291. D. h., dass beide Abzweigungskanäle 293 denselben Pufferraum 291 im oberen Bereich 294 nutzen. Dieser weitere Pufferraum 291 weist also insgesamt zwei Einlässe und zwei Auslässe auf, jeweils einen für einen Abzweigungskanal 293 und jeweils einen für den anderen Abzweigungskanal 293.

Bei einer vereinfachten Ausführungsform des Kolbens 201 ist es auch möglich, den Schmiermittelkanal 290 direkt im Sinne des Abzweigungskanals 293 weiterzuführen. Bei einer derartigen Ausführung erfolgt keine Führung von Schmiermittel zur Umfangsfläche 205 des Kolbens 201, sondern lediglich eine Führung - ohne irgendeine Abzweigung - von der Hinterschneidung 211 oder der Innenfläche 213 der Hinterschneidung 211 aus bis wieder zur Hinterschneidung 211, bis zur Innenfläche 213, bis zur Unterseite 207 des Kolbens 201 oder bis zu einem Auslass 295 in einem Bereich 296 der Hinterschneidung 211. Hierdurch wäre ein Kreislauf oder eine Kreisführung von Schmiermittel im Kolben 201 oder in der Pleuelstangenaufnahme 210 realisiert.

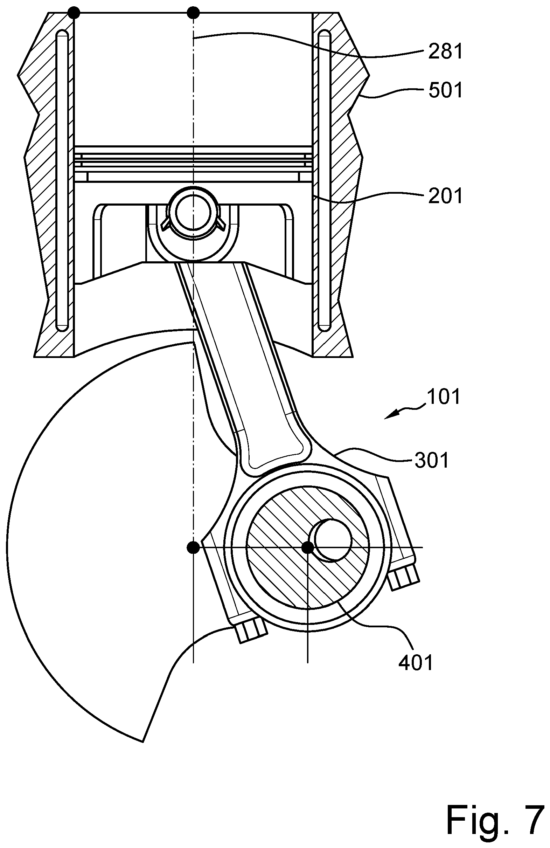

Figur 7 zeigt in einer Seitenansicht, teilweise geschnitten, ein Ausführungsbeispiel eines erfindungsgemäßen Kurbeltriebs, wobei der Kurbeltrieb einen Kolben 201 gemäß einem der oben beschriebenen Ausführungsbeispiele sowie eine entsprechende Pleuelstange 301 mit einer innen liegenden Schmiermittelführung - also eine Kurbeleinheit 101 - und eine Kurbelwelle 401 umfasst. Die Pleuelstange 301 ist mit der Kurbelwelle 401 in üblicher Weise gekoppelt. Der Kolben 201 ist in einer Zylinderanordnung 501 entlang einer Bewegungsachse 281 bewegbar.

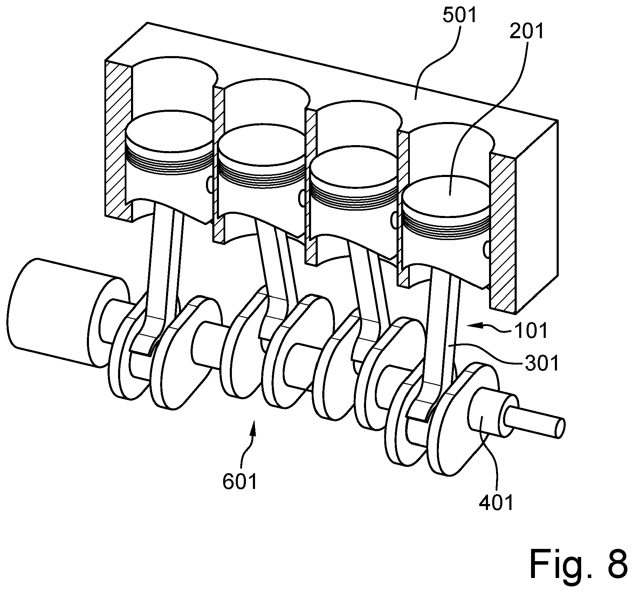

Figur 8 zeigt in einer perspektivischen und teilweise geschnittenen Ansicht - in einem Ausschnitt - ein Ausführungsbeispiel eines Hubkolben-Verbrennungsmotors 601 mit einer Zylinderanordnung 501 mit vier Zylindern zur Bildung eines Reihen-Vierzylindermotors und mit Kolben 201 und Pleuelstangen 301 gemäß einem der obigen Ausführungsbeispiele. Dabei bildet jeweils ein Kolben 201 und eine Pleuelstange 301 eine Kurbeleinheit 101. Die Pleuelstange 301 ist mit einer Kurbelwelle 401 gekoppelt.

Bei den in den Figuren 7 und 8 gezeigten Ausführungsbeispielen ist das "Innenleben" des Kolbens 201 sowie der Pleuelstange 301 der Übersichtlichkeit halber nicht gezeigt.

In diesem Zusammenhang sei darauf hingewiesen, dass bei sämtlichen Ausführungsbeispielen die geometrische Ausgestaltung des Kolbens 201 wie oben dargelegt zusätzlich die Wärmeabfuhr optimiert. Der zentrale Anschluss der Pleuelstange 301 in der Aufnahme 210 des Kolbens 201 ermöglicht eine gute Wärmeleitung, sodass damit auch der aus dem Stand der Technik bekannte "Feuersteg" entfallen kann. Zusammen mit der einfachen Geometrie und gleichmäßigen Rundheit des Kolbens 201 kann so ein einfach herzustellender und zudem sehr effizienter Dieselmotor bereitgestellt werden.

Im Ergebnis kann der Dieselmotor mit hohen Verbrennungstemperaturen und damit einer schadstoffarmen und effizienten Verbrennung betrieben werden, da mittels der Geometrie des Kolbens 201, der kompakten Bauform und zentralen Abfuhr von Wärme in die Pleuelstange 301 und mittels des gesteuerten Ölflusses des Motoröls ein gutes Wärmemanagement sichergestellt ist. Insgesamt weist die erfindungsgemäße Kombination aus Kolben 201 und Pleuelstange 301 damit ein sehr geringes Gewicht und damit reduzierte bewegte Massen auf. Es sei darauf hingewiesen, dass diese Art von Kolben 201 sowie Pleuelstange 301 zwar im vorliegenden Beispiel für einen Dieselmotor mit Hochdruck-Einspritzung und einer Aufladung dargestellt wurde, sich die entsprechende Anordnung aus Kolben 201 und Pleuelstange 301 allerdings auch für andere Hubkolben-Maschinen eignet, beispielsweise Ottomotoren, Kompressoren oder Dies-Otto-Motoren.

### Bezugszeichenliste

- 101: Kurbeleinheit
- 183: Schwenkachse
- 185: Kurbelachse
- 201: Kolben
- 203: Oberseite
- 205: Umfangsfläche
- 207: Unterseite
- 210: Aufnahme
- 211: Hinterschneidung
- 213: Innenfläche
- 215: Ringnut
- 216: Durchmesser
- 217: Kante
- 218: Durchmesser
- 219: Kolbenhemd
- 220: Ausschnitt
- 221: Umfangskragen
- 223: Ringnut
- 225: Ringnut
- 227: Ringnut
- 229: Bohrung
- 231: Aufdickung
- 233: Tasche
- 235: Aufdickung
- 241: Brennraum
- 243: Kalotte
- 261: Breite
- 271: Schnittebene
- 273: Schnittebene
- 275: Schnittebene
- 281: Bewegungsachse
- 282: Radius
- 284: Radius
- 290: Schmiermittelkanal
- 291: Pufferraum
- 292: Abzweigung
- 293: Abzweigungskanal
- 294: Bereich
- 295: Auslass
- 296: Bereich
- 297: Bereich
- 298: Ausnehmung
- 299: Auslass
- 301: Pleuelstange
- 303: Pleuelkopf
- 305: Mittelbereich
- 306: Vertiefung
- 307: Kurbelwellenanschluss
- 308: Deckel
- 309: Kurbelwellenauge
- 311: Außenfläche
- 312: Fase
- 315: Steg
- 316: Ausnehmung
- 321: Lagerschale
- 341: Ventilnut
- 343: Austrittsöffnung
- 345: Ölkanal
- 347: Eintrittsöffnung
- 401: Kurbelwelle
- 501: Zylinderanordnung
- 601: Hubkolben-Verbrennungsmotor

## Patentansprüche

1. Pleuelstange (301), insbesondere für eine Kraftmaschine, mit einem Kopfbereich (303), einem Mittelbereich (305) und einem Fußbereich (307), wobei der Kopfbereich (303) einen ersten Anschluss mit einer Aufdickung (303) zum um eine Schwenkachse (183) drehbeweglichen Anschließen eines Kolbens (201) an einer eine zur Aufdickung (303) korrespondierende Hinterschneidung (211) aufweisenden Pleuelstangenaufnahme (210) des Kolbens (201) und der Fußbereich (307) einen zweiten Anschluss zum Aufnehmen einer Kurbelwelle aufweist und der Kopfbereich (303) über den Mittelbereich (305) mit dem Fußbereich (307) verbunden ist, wobei die Pleuelstange (301) eine den zweiten Anschluss mit dem ersten Anschluss flüssigkeitsführend verbindende Schmiermittelführung (343, 345, 347) aufweist, sodass ein am zweiten Anschluss im Bereich der Kurbelwelle in die Schmiermittelführung (343, 345, 347) eingebrachtes Schmiermittel durch die Schmiermittelführung (343, 345, 347) zum ersten Anschluss geführt ist und das Schmiermittel zum Schmieren und/oder Kühlen des ersten Anschlusses vorliegt, **dadurch gekennzeichnet, dass** der Aufdickung (303) eine mit der Schmiermittelführung (343, 345, 347) in Fluidkommunikation stehende Ventileinrichtung zugeordnet ist, welche so ausgestaltet ist, dass Schmiermittelfluss durch die Schmiermittelführung (343, 345, 347) nur möglich ist, wenn die Verbindung zwischen Kolben (201) und Pleuelstange (301) unbelastet oder nur wenig belastet ist.

2. Pleuelstange (301) gemäß Anspruch 1, **dadurch gekennzeichnet, dass** die Schmiermittelführung (343, 345, 347) einen Schmiermittelkanal (345) aufweist, wobei der Schmiermittelkanal (345) insbesondere entlang des Mittelbereiches (305) verläuft.

3. Pleuelstange (301) gemäß Anspruch 1 oder 2, **dadurch gekennzeichnet, dass** die Schmiermittelführung (343, 345, 347) von einem dem zweiten Anschluss zugeordneten Kurbelwellenauge (307) zu der Aufdickung (303), insbesondere von einer Innenfläche des Kurbelwellenauges (307) zur Aufdickung (303), verläuft.

4. Pleuelstange (301) gemäß einem der vorherigen Ansprüche, **dadurch gekennzeichnet, dass** die Schmiermittelführung (343, 345, 347) mittels Funkenerosion und/oder mittels Tiefbohren in die Pleuelstange (301) eingebracht ist.

5. Pleuelstange (301) gemäß einem der vorherigen Ansprüche, **dadurch gekennzeichnet, dass** die Schmiermittelführung (343, 345, 347) an der Aufdickung (303) ein Schmiermittelreservoir (341) aufweist, wobei das Schmiermittelreservoir (341) insbesondere in eine Außenfläche (311) der Aufdickung (303) eingebracht und/oder der Pleuelstangenaufnahme (210) zugeordnet ist.

6. Kolben (201), insbesondere für eine Kraftmaschine, mit einer Oberseite (203), einer Unterseite (207) und einer Umfangsfläche (205), wobei die Umfangsfläche (205) zum Führen des Kolbens (201) in einer Zylinderbohrung und die Oberseite (203) zum Aufnehmen von Druckkräften eines Gases in einem Zylinder ausgestaltet sind, die Unterseite (207) eine Pleuelstangenaufnahme (210) mit einer in einer Zug- und Druckrichtung im Wesentlichen parallel zu einer Schwenkachse (183) angeordneten Hinterschneidung (211) mit einem Querschnitt aufweist und die Pleuelstangenaufnahme (210) zum formschlüssigen und um die Schwenkachse (183) schwenkbaren Aufnehmen einer zur Pleuelstangenaufnahme (210) korrespondierenden Aufdickung (303) einer Pleuelstange (301) gemäß einem der Ansprüche 1 bis 5 eingerichtet ist, **dadurch gekennzeichnet, dass** die Pleuelstangenaufnahme (210) eine Ventileinrichtung zum Steuern eines am zweiten Anschluss im Bereich der Kurbelwelle in die Schmiermittelführung (343, 345, 347) eingebrachten und durch die Schmiermittelführung (343, 345, 347) zum ersten Anschluss geführten Schmiermittelflusses aufweist, und welche so ausgestaltet ist, dass der Schmiermittelfluss mittels eines Schwenkens der Aufdickung (303) um die Schwenkachse (183) gesteuert werden kann, und insbesondere im Bereich eines oberen Totpunktes und/oder im Bereich eines unteren Totpunktes des Kolbens (201) in der Zylinderbohrung begrenzt oder verhindert ist.

7. Kolben (201) gemäß Anspruch 6, **dadurch gekennzeichnet, dass** die Ventileinrichtung eine in eine Innenfläche (213) der Hinterschneidung (211) eingebrachte Steuertasche oder mehrere in eine Innenfläche (213) der Hinterschneidung (211) eingebrachte Steuertaschen aufweist, sodass der Schmiermittelfluss bei einer im Wesentlichen geradlinigen Anordnung der Pleuelstange (301) in Bezug zu einer Bewegungsachse (281) des Kolbens (201) in der Zylinderbohrung begrenzt oder verhindert ist.

8. Kolben (201) gemäß Anspruch 6 oder 7, **dadurch gekennzeichnet, dass** die Ventileinrichtung, insbesondere die Steuertasche, derart angeordnet und/oder ausgebildet ist, dass für einen Winkel von +/-20°, +/-15°, +/-10° und/oder +/-5° zwischen einer Längsachse der Pleuelstange und der Bewegungsachse (281) des Kolbens (201) in der Zylinderbohrung der Schmiermittelfluss begrenzt ist.

9. Kolben (201) gemäß einem der Ansprüche 6 bis 8, **dadurch gekennzeichnet, dass** die Pleuelstangenaufnahme (210) mindestens einen sich von der Hinterschneidung (211) oder einer Innenfläche (213) der Hinterschneidung (211) bis zur Umfangsfläche (205) und/oder bis zu einer oder mehreren in der Umfangsfläche (205) angeordneten oder ausgebildeten Ringnuten (223, 225, 227) erstreckenden Schmiermittelkanal (290) aufweist.

10. Kolben (201) gemäß Anspruch 9, **dadurch gekennzeichnet, dass** ein Ende des mindestens einen Schmiermittelkanals (290) in eine in der Umfangsfläche (205) oder im Bereich der Ringnuten (223, 225, 227) ausgebildete Ausnehmung (298) mündet.

11. Kolben (201) gemäß Anspruch 9 oder 10, **dadurch gekennzeichnet, dass** in mindestens einem Schmiermittelkanal (290) mindestens ein Abschnitt mit einem gegenüber einem Durchmesser des mindestens einen Schmiermittelkanals (290) vergrößerten Durchmesser oder mindestens ein Pufferraum (291) für Schmiermittel ausgebildet ist.

12. Kolben (201) gemäß Anspruch 11, **dadurch gekennzeichnet, dass** der mindestens eine Pufferraum (291) im Wesentlichen kugelförmig ausgebildet ist oder dass der mindestens eine Pufferraum (291) im Bereich einer oder mehrerer in der Umfangsfläche (205) angeordneten oder ausgebildeten Ringnuten (223, 225, 227) länglich und/oder gekrümmt ausgebildet ist.

13. Kolben (201) gemäß einem der Ansprüche 9 bis 12, **dadurch gekennzeichnet, dass** der mindestens eine Schmiermittelkanal (290) eine Abzweigung (292) mit einem Abzweigungskanal (293) zur Führung von Schmiermittel in Richtung eines an die Oberseite (203) des Kolbens (201) angrenzenden Bereichs (294) aufweist,
wobei die Abzweigung (292) in einem - vorzugsweise im Wesentlichen kugelförmigen - Pufferraum (291) gebildet sein kann und/oder
wobei sich der Abzweigungskanal (293) nach einem Passieren des Bereichs (294) bis zur Hinterschneidung (211), bis zu einer Innenfläche (213) der Hinterschneidung (211), bis zur Unterseite (207) des Kolbens (201) oder mit einem Auslass (295) bis zu einem Bereich (296) der Hinterschneidung (211) oder Pleuelstangenaufnahme (210), der neben demjenigen Bereich (297) der Hinterschneidung (211) ausgebildet ist, in dem sich eine Aufdickung (303) einer Pleuelstange (301) im mit dem Kolben (201) gekoppelten Betriebszustand befindet, erstrecken kann.

14. Kurbeltrieb (101), insbesondere für eine Kraftmaschine und/oder für einen Hubkolben-Verbrennungsmotor (601), mit einem Kolben (201), einer Pleuelstange (301) und einer Kurbelwelle (401), **gekennzeichnet durch** einen Kolben (201) gemäß einem der Ansprüche 6 bis 13 und/oder eine Pleuelstange (301) gemäß einem der Ansprüche 1 bis 5.

15. Hubkolben-Verbrennungsmotor (601), insbesondere Dieselmotor oder Ottomotor, mit einem Kolben (201) gemäß einem der Ansprüche 6 bis 13, einer Pleuelstange (301) gemäß einem der Ansprüche 1 bis 5 und/oder einem Kurbeltrieb (101) gemäß Anspruch 14.

## Claims

1. Connecting rod (301), in particular for a power machine, with a head section (303), a middle section (305) and a foot section (307), wherein the head section (303) has a first connection with a thickening (303) for rotatably connecting a piston (201), about a swivel axis (183), to an undercut (211) corresponding to the thickening (303) of a connecting rod mount (210) of the piston (201) and the foot section (307) has a second connection for receiving a crankshaft, and the head section (303) is connected to the foot section (307) via the middle section (305),
wherein the connecting rod (301) has a lubricant guide (343, 345, 347) connecting the second connection to the first connection in a fluid-conducting manner, such that lubricant, introduced into the lubricant guide (343, 345, 347) at the second connection in the vicinity of the crankshaft, , is guided through the lubricant guide (343, 345, 347) to the first connection and the lubricant is available for lubricating and/or cooling the first connection,
**characterised in that** a valve device, in fluid communication with the lubricant guide (343, 345, 347), is assigned to the thickening (303),and which is designed such that lubricant flow through the lubricant guide (343, 345, 347) is only possible when the connection between the piston (201) and the connecting rod (301) is unloaded or only slightly loaded.

2. Connecting rod (301) according to claim 1, **characterised in that** the lubricant guide (343, 345, 347) has a lubricant channel (345), wherein in particular the lubricant channel (345) runs in particular along the middle section (305).

3. Connecting rod (301) according to claim 1 or 2, **characterised in that** the lubricant guide (343, 345, 347) runs from a crankshaft eye (307), associated with the second connection, to the thickening (303), in particular from an inner surface of the crankshaft eye (307) to the thickening (303).

4. Connecting rod (301) according to one of the previous claims, **characterised in that** the lubricant guide (343, 345, 347) is introduced into the connecting rod (301) by means of spark erosion and/or deep boring.

5. Connecting rod (301) according to one of the previous claims, **characterised in that** the lubricant guide (343, 345, 347) has a lubricant reservoir (341) on the thickening (303), wherein in particular the lubricant reservoir (341) is introduced into an outer surface (311) of the thickening (303) and/or is assigned to the connecting rod mount (210).

6. Piston (201), in particular for a power machine, with an upper side (203), a lower side (207) and a circumferential surface (205), wherein the circumferential surface (205) is designed for guiding the piston (201) in a cylinder bore and the upper side (203) is designed for absorbing compressive forces of a gas in a cylinder, the lower side (207) has a connecting rod mount (210) with an undercut (211) arranged in a tensile and compressive direction, essentially parallel to a swivel axis (183) with a cross section, and the connecting rod mount (210), designed to receive, in a form-fitting manner and pivotable about the swivel axis (183), the thickening (303) of a connecting rod (301) corresponding to the connecting rod mount (210) in accordance with one of claims 1 to 5, **characterised in that** the connecting rod mount (210) has a valve device for controlling a lubricant flow, introduced at the second connection in the area of the crankshaft into the lubricant guide (343, 345, 347) and guided by the lubricant guide (343, 345, 347) to the first connection, and which is designed in such a way that the lubricant flow can be controlled by pivoting the thickening (303) about the swivel axis (183), and in particular is limited or prevented in the area of an upper dead centre and/or in the area of a lower dead centre of the piston (201) in the cylinder bore.

7. Piston (201) according to claim 6, **characterised in that** the valve device has one or more control pockets introduced into an inner surface (213) of the undercut (211), so that the flow of lubricant is restricted or prevented in the cylinder bore when the connecting rod (301) is arranged in an essentially straight line with respect to an axis of movement (281) of the piston (201).

8. Piston (201) according to claim 6 or 7, **characterised in that** the valve device, in particular the control pocket, is arranged and/or designed in such a way that for an angle of +/-20°, +/-15°, +/-10° and/or +/-5° between a longitudinal axis of the connecting rod and the axis of movement (281) of the piston (201) in the cylinder bore, the flow of lubricant is restricted.

9. Piston (201) according to any one of claims 6 to 8, **characterised in that** the connecting rod mount (210) has at least one lubricant channel (290), extending from the undercut (211), or an inner surface (213) of the undercut (211), to the circumferential surface (205) and/or to one or more annular grooves (223, 225, 227) arranged or formed in the circumferential surface (205).

10. Piston (201) according to claim 9, **characterised in that** an end of the at least one lubricant channel (290), opens into a recess (298) formed in the circumferential surface (205) or in the area of the annular grooves (223, 225, 227).

11. Piston (201) according to claim 9 or 10, **characterised in that** in the at least one lubricant channel (290) at least one section is included, which has a diameter larger than the diameter of the at least one lubricant channel (290), or that at least one buffer space (291) for lubricant is formed.

12. Piston (201) according to claim 11, **characterised in that** the at least one buffer space (291) is essentially spherical in shape or that the at least one buffer space (291), arranged or formed in the area of at least one of the annular grooves (223, 225, 227) at the circumferential surface (205), is elongated and/or curved.

13. Piston (201) according to one of claims 9 to 12, **characterised in that** the at least one lubricant channel (290) has a branch (292) with a branch channel (293) for guiding lubricant towards an area (294) adjacent to the upper side (203) of the piston (201),
wherein the branch (292) may be formed in a - preferably essentially spherical - buffer space (291) and/or
wherein the branch channel (293) extends, after passing the area (294), to the undercut (211), to an inner surface (213) of the undercut (211), to the underside (207) of the piston (201), or with an outlet (295) to an area (296) of the undercut (211) or connecting rod mount (210), which is formed next to the area (297) of the undercut (211) by a thickening (303) of a connecting rod (301) being in a coupled operating state with the piston (201).

14. Crank mechanism (101), in particular for a power machine and/or for a reciprocating internal combustion engine (601), with a piston (201), a connecting rod (301) and a crankshaft (401), **characterised by** a piston (201) according to one of claims 6 to 13 and/or a connecting rod (301) according to one of claims 1 to 5.

15. Reciprocating internal combustion engine (601), in particular a diesel engine or Otto engine, with a piston (201) according to one of claims 6 to 13, a connecting rod (301) according to one of claims 1 to 5 and/or a crank mechanism (101) according to claim 14.

## Revendications

1. Bielle (301), en particulier pour une machine motrice, comprenant une zone de tête (303), une zone médiane (305) et une zone de pied (307), la zone de tête (303) comprenant un premier raccord avec un renflement (303) pour le raccordement pivotant autour d'un axe de pivotement (183) d'un piston (201) à un logement de bielle (210) du piston (201) présentant une contre-dépouille (211) correspondant au renflement (303), et la zone de pied (307) comprenant un second raccord pour recevoir un vilebrequin, et la zone de tête (303) étant reliée à la zone de pied (307) par l'intermédiaire de la zone médiane (305), la bielle (301) comprenant un conduit de lubrifiant (343, 345, 347) reliant de manière conductrice de fluide le second raccord au premier raccord, de sorte qu'un lubrifiant introduit au niveau du second raccord dans la zone du vilebrequin dans le conduit de lubrifiant (343, 345, 347) est guidé par le conduit de lubrifiant (343, 345, 347) vers le premier raccord et que le lubrifiant est présent pour lubrifier et/ou refroidir le premier raccord, **caractérisée en ce que**
au renflement (303) est associée une dispositif de soupape en communication fluidique avec le conduit de lubrifiant (343, 345, 347), laquelle est conçue de telle sorte qu'un flux de lubrifiant à travers le conduit de lubrifiant (343, 345, 347) n'est possible que lorsque la liaison entre le piston (201) et la bielle (301) est non chargée ou seulement faiblement chargée.

2. Bielle (301) selon la revendication 1, **caractérisée en ce que** le conduit de lubrifiant (343, 345, 347) comprend un canal de lubrifiant (345), le canal de lubrifiant (345) s'étendant en particulier le long de la zone médiane (305).

3. Bielle (301) selon la revendication 1 ou 2, **caractérisée en ce que** le conduit de lubrifiant (343, 345, 347) s'étend d'un œil de vilebrequin (307) associé au second raccord vers le renflement (303), en particulier d'une surface intérieure de l'oeil de vilebrequin (307) vers le renflement (303).

4. Bielle (301) selon l'une des revendications précédentes, **caractérisée en ce que** le conduit de lubrifiant (343, 345, 347) est introduit dans la bielle (301) par électroérosion et/ou par forage profond.

5. Bielle (301) selon l'une des revendications précédentes, **caractérisée en ce que** le conduit de lubrifiant (343, 345, 347) comprend un réservoir de lubrifiant (341) au niveau du renflement (303), le réservoir de lubrifiant (341) étant en particulier introduit dans une surface extérieure (311) du renflement (303) et/ou associé au logement de bielle (210).

6. Piston (201), en particulier pour une machine motrice, comprenant une face supérieure (203), une face inférieure (207) et une surface périphérique (205), la surface périphérique (205) servant à guider le piston (201) dans un alésage de cylindre et la face supérieure (203) étant conçue pour recevoir des forces de pression d'un gaz dans un cylindre, la face inférieure (207) comprenant un logement de bielle (210) avec une contre-dépouille (211) disposée dans une direction de traction et de pression sensiblement parallèle à un axe de pivotement (183) avec une section transversale, et le logement de bielle (210) étant conçu pour recevoir de manière à ajustement de forme et pivotante autour de l'axe de pivotement (183) un renflement (303) correspondant du logement de bielle (210) d'une bielle (301) selon l'une des revendications 1 à 5,
**caractérisé en ce que** le logement de bielle (210) comprend une dispositif de soupape pour commander un flux de lubrifiant introduit au niveau du second raccord dans la zone du vilebrequin dans le conduit de lubrifiant (343, 345, 347) et guidé par le conduit de lubrifiant (343, 345, 347) vers le premier raccord, et laquelle est conçue de telle sorte que le flux de lubrifiant peut être commandé par pivotement du renflement (303) autour de l'axe de pivotement (183), et en particulier est limité ou empêché dans la zone d'un point mort haut et/ou dans la zone d'un point mort bas du piston (201) dans l'alésage de cylindre.

7. Piston (201) selon la revendication 6, **caractérisé en ce que** la dispositif de soupape comprend une poche de commande introduite dans une surface intérieure (213) de la contre-dépouille (211) ou plusieurs poches de commande introduites dans une surface intérieure (213) de la contre-dépouille (211), de sorte que le flux de lubrifiant est limité ou empêché lors d'un agencement sensiblement rectiligne de la bielle (301) par rapport à un axe de mouvement (281) du piston (201) dans l'alésage de cylindre.

8. Piston (201) selon la revendication 6 ou 7, **caractérisé en ce que** la dispositif de soupape, en particulier la poche de commande, est disposée et/ou conçue de telle sorte que, pour un angle de +/-20°, +/-15°, +/-10° et/ou +/-5° entre un axe longitudinal de la bielle et l'axe de mouvement (281) du piston (201) dans l'alésage de cylindre, le flux de lubrifiant est limité.

9. Piston (201) selon l'une des revendications 6 à 8, **caractérisé en ce que** le logement de bielle (210) comprend au moins un canal de lubrifiant (290) s'étendant de la contre-dépouille (211) ou d'une surface intérieure (213) de la contre-dépouille (211) jusqu'à la surface périphérique (205) et/ou jusqu'à une ou plusieurs gorges annulaires (223, 225, 227) disposées ou formées dans la surface périphérique (205).

10. Piston (201) selon la revendication 9, **caractérisé en ce qu'**une extrémité du ou des canaux de lubrifiant (290) débouche dans un évidement (298) formé dans la surface périphérique (205) ou dans la zone des gorges annulaires (223, 225, 227).

11. Piston (201) selon la revendication 9 ou 10, **caractérisé en ce qu'**au moins une section du ou des canaux de lubrifiant (290) présente un diamètre augmenté par rapport à un diamètre du ou des canaux de lubrifiant (290) ou qu'au moins une chambre tampon (291) pour lubrifiant est formée.

12. Piston (201) selon la revendication 11, **caractérisé en ce que** la ou les chambres tampon (291) sont formées de manière essentiellement sphérique ou **en ce que** la ou les chambres tampon (291) sont formées dans la zone d'une ou de plusieurs gorges annulaires (223, 225, 227) disposées ou formées dans la surface périphérique (205) de manière allongée et/ou courbée.

13. Piston (201) selon l'une des revendications 9 à 12, **caractérisé en ce que** le ou les canaux de lubrifiant (290) comprennent une dérivation (292) avec un canal de dérivation (293) pour guider le lubrifiant en direction d'une zone (294) adjacente à la face supérieure (203) du piston (201), la dérivation (292) pouvant être formée dans une chambre tampon (291) - de préférence essentiellement sphérique - et/ou
le canal de dérivation (293) pouvant s'étendre, après avoir traversé la zone (294), jusqu'à la contre-dépouille (211), jusqu'à une surface intérieure (213) de la contre-dépouille (211), jusqu'à la face inférieure (207) du piston (201) ou, avec un orifice de sortie (295), jusqu'à une zone (296) de la contre-dépouille (211) ou du logement de bielle (210), qui est formée à côté de la zone (297) de la contre-dépouille (211) dans laquelle se trouve un renflement (303) d'une bielle (301) à l'état de fonctionnement couplé avec le piston (201).

14. Mécanisme de manivelle (101), en particulier pour une machine motrice et/ou pour un moteur à combustion interne à piston alternatif (601), comprenant un piston (201), une bielle (301) et un vilebrequin (401), **caractérisé par** un piston (201) selon l'une des revendications 6 à 13 et/ou une bielle (301) selon l'une des revendications 1 à 5.

15. Moteur à combustion interne à piston alternatif (601), en particulier moteur diesel ou moteur à essence, comprenant un piston (201) selon l'une des revendications 6 à 13, une bielle (301) selon l'une des revendications 1 à 5 et/ou un mécanisme de manivelle (101) selon la revendication 14.
